# EUROPEAN PATENT SPECIFICATION

(11) **EP 4 293 657 B1**
(45) Date of publication and mention of the grant of the patent: **30.09.2026**
(21) Application number: 23178214.5
(22) Date of filing: 08.06.2023
(51) Int. Cl.: G10H 1/00, G10H 1/055

(54) **ELECTRONIC MUSICAL INSTRUMENT, LIGHT EMISSION CONTROL METHOD, AND PROGRAM**
ELEKTRONISCHES MUSIKINSTRUMENT, LICHTEMISSIONSSTEUERVERFAHREN UND PROGRAMM
INSTRUMENT DE MUSIQUE ÉLECTRONIQUE, PROCÉDÉ DE COMMANDE D'ÉMISSION DE LUMIÈRE ET PROGRAMME

(30) Priority: 17.06.2022 JP 2022098455
(43) Date of publication of application: 20.12.2023
(73) Proprietor: Casio Computer Co., Ltd., Tokyo 151-8543 (JP)
(72) Inventor: OKANO, Shingo, Tokyo, 205-8555 (JP); IKEDA, Akira, Tokyo, 205-8555 (JP); TERAO, Ken, Tokyo, 205-8555 (JP); MORIYAMA, Osamu, Tokyo, 205-8555 (JP); KAJIKAWA, Tomoya, Tokyo, 205-8555 (JP); ICHIMURA, Yutaro, Tokyo, 205-8555 (JP)
(74) Representative: Plougmann Vingtoft a/s

(56) References cited:
- WO-A1-2013/140440
- JP-A- 2018 054 860
- US-A1- 2020 379 715
- US-B1- 9 196 236

## Description

### TECHNICAL FIELD

The present disclosure relates to an electronic musical instrument, a light emission control method, and a program.

### DESCRIPTION OF RELATED ART

Regarding electronic musical instruments that electronically detect operations by the user and emit sound, there is a technology for causing an operation switch, keys of a keyboard, and the like to emit light using supplied power. Also, some electronic musical instruments have an operation member called a pitch bender for changing a pitch of output sound in response to a rotating operation.

JP2018-054860A discloses a technology for changing an emission color of a rotating wheel such as a pitch bender and a modulation wheel in an electronic keyboard musical instrument such that beginners and the like are led to perform a rotating operation of the rotating wheel.

### SUMMARY OF THE INVENTION

### [Problem to be solved by the invention]

However, such light-emitting action of the rotating wheel for leading the player is inorganic and unenjoyable as an action during standby or performance.

An object of the present disclosure is to provide an electronic musical instrument, a light emission control method, and a program that can be used more enjoyably by the user than conventional ones.

In order to achieve the above object, the invention is as defined by the appended set of claims.

### BRIEF DESCRIPTION OF DRAWINGS

FIG. 1 is a plan view of an electronic keyboard musical instrument, which is an electronic musical instrument of the present embodiment.
FIG. 2 is a block diagram illustrating a functional configuration of the electronic keyboard musical instrument.
FIG. 3A is a diagram illustrating an example of changes in luminances of LEDs of respective colors in response to an operation of a pitch bender.
FIG. 3B is a diagram illustrating an example of changes in luminances of LEDs of respective colors in response to an operation of a pitch bender.
FIG. 4 is a diagram illustrating an example of changes in luminance of the pitch bender light emitter over time.
FIG. 5 is a flowchart illustrating a control procedure in the light emission control process.
FIG. 6 is a flowchart illustrating a control procedure in the display and light emission control process.

### DETAILED DESCRIPTION

Hereinafter, one or more embodiments of the present disclosure will be described with reference to the drawings.

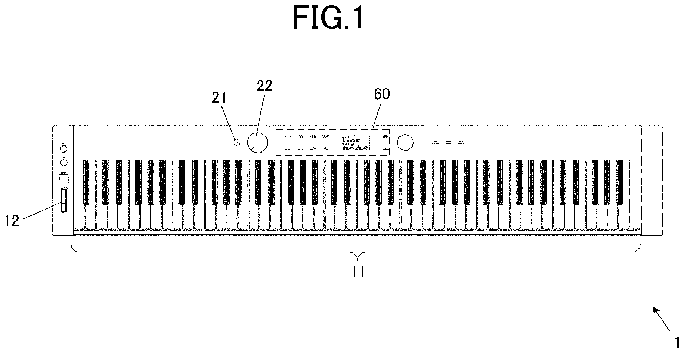

FIG. 1 is a plan view of an electronic keyboard musical instrument 1 that is an electronic musical instrument of the present embodiment viewed from above.

The electronic keyboard musical instrument 1 has a keyboard 11, a pitch bender 12 (pitch bend), a power button 21, a volume controller 22, and a display 60.

The keyboard 11 is not particularly limited but has white and black keys that are aligned and receive operations to output respective notes over a range of seven octaves. Unless otherwise set, the keyboard 11 receives output of a semitone in accordance with the equal temperament. The keyboard 11 may include a foot-operated pedal keyboard (foot keyboard) in addition to or instead of the normal finger-operated keyboard.

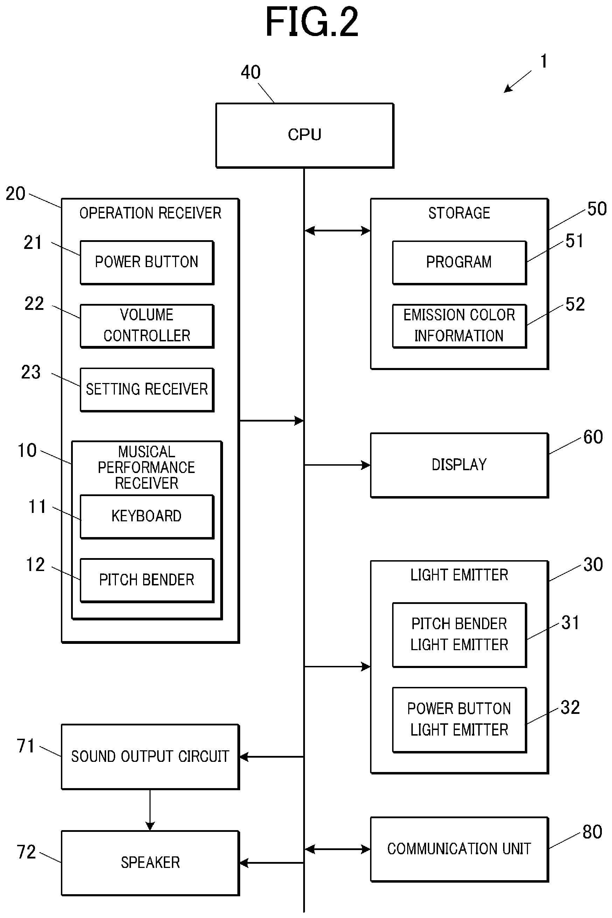

The pitch bender 12 has an approximately disk shape and is positioned such that the normal direction of the disk surface is parallel to the aligning direction of the keyboard 11 (left and right direction of FIG. 1). The pitch bender 12 is a rotary wheel that is positioned so that an outer edge of the disk of a certain angular range protrudes from an upper surface of the electronic keyboard musical instrument 1. The pitch bender 12 is a rotary wheel that receives a rotating operation around the above normal passing through the center of the disk, and the movable angular range of the rotary wheel is larger than the angular range of the protruding outer edge. In response to the rotating operation of the pitch bender 12, the electronic keyboard musical instrument 1 continuously changes the pitch, which can only be output every semitone with the keyboard 11, depending on the rotation angle, that is, the rotation amount from the center position of the rotation range as a reference (reference position). The pitch bender 12 automatically returns to the reference position (rotation amount becomes zero) when the user removes his or her finger from the pitch bender 12. In response to a setting operation, the amount of change in pitch when the rotation angle (rotation amount) of the pitch bender 12 is at its maximum may be changed (for example, in the range of a semitone to one octave). The pitch bender 12 has a pitch bender light emitter 31 that is along the outer circumference of the side surfaces of the pitch bender 12 and emits light in an arc-shape (see FIG. 2).

The electronic keyboard musical instrument 1 may have a modulation wheel instead of or together with the pitch bender 12. The modulation wheel adjusts and defines the degree of sound modulation, for example, vibrato. Like the pitch bender 12, the modulation wheel receives the rotating operation within a certain angular range from a center position of the rotation range as a reference. Unlike the pitch bender 12, when the user removes his or her finger, the modulation wheel does not automatically return to its reference position (the rotation amount does not become zero), but remains still.

The power button 21 is a pushbutton that receives an operation of switching whether or not power is supplied. The power button 21 includes a power button light emitter 32 (see FIG. 2) that emits light when the power supply is turned on. The light emitted by the power button light emitter 32 may be white, but is not limited to this.

The volume controller 22 is a rotary controller that adjusts volume of sound that is output from a speaker 72 (see FIG. 2). The rotary controller has a sign indicating the rotating direction. The rotary controller can rotate within a predetermined range (for example, a range of about 300 degrees). For example, the more the sign moves clockwise, the louder the output volume is controlled to be. The volume controller 22 may be another operating means such as a combination of one pushbutton switch to increase volume and another pushbutton switch to decrease volume.

The display 60 displays the setting status and contents of various functions. For example, the display 60 has a light source such as an LED (Light Emitting Diode). The status of function settings is indicated by whether or not the light source such as an LED is turned on, by whether or not the light source such as an LED is blinking, or by the frequency or pattern of the blinking below (inside) a light-emitting window that is labeled with a sign or the like to identify the content of each function setting. Instead of or in addition to this configuration, the display 60 may have a display screen on which characters, signs, and the like are displayed so as to indicate the contents of the settings, such as a setting of output sound quality.

FIG. 2 is a block diagram illustrating a functional configuration of the electronic keyboard musical instrument 1.

The electronic keyboard musical instrument 1 includes an operation receiver 20, a light emitter 30, a CPU 40 (Central Processing Unit) (controller), a storage 50, the display 60, a sound output circuit 71, the speaker 72, a communication unit 80, and the like.

The operation receiver 20 receives an input operation and outputs a signal in response to the input operation. The operation receiver 20 includes a musical performance receiver 10. The musical performance receiver 10 receives operations to designate pitches of the output sound. The musical performance receiver 10 includes the keyboard 11 and the pitch bender 12. The musical performance receiver 10 may also be able to receive other operations directly related to the musical performance, such as temporarily changing the tone, reverberation (echo), and the like, or changing the volume balance.

In addition to the above, the operation receiver 20 includes the above power button 21 and volume controller 22. The operation receiver 20 also includes a setting receiver 23. The setting receiver 23 receives operations related to switching the above-mentioned functional setting or the like. The setting receiver 23 may have one or a combination of some of a dedicated pushbutton switch, rotary switch, rocker switch, slide switch, or the like, or it may be a touch panel or the like.

The light emitter 30 includes the above pitch bender light emitter 31 (first light emitter) and the power button light emitter 32 (second light emitter). They each have an LED(s) as a light source(s). The power button light emitter 32 may be a monochromatic white LED. The power button 21, for example, includes a cover member made of a circular light-transmitting member, and the LED located under the cover member emits light outward through the light-transmitting member. The light-transmitting member does not need to be made of a material that enables the other side (that is, the interior of the electronic keyboard musical instrument 1) visible through the member.

The pitch bender light emitter 31 has a set of LEDs of respective RGB colors and can emit colored light. The light emitted by the LEDs in the pitch bender 12 is guided to the periphery of the pitch bender 12 via a light guide member as needed and is emitted outward through the light-transmitting member. Because of the light-transmitting member, the light is emitted almost evenly (with little non-uniformity). The emission color can be switched as appropriate with the combination of luminances of the respective RGB colors. The pitch bender light emitter 31 may have multiple sets (for example, three sets) of LEDs that emit light in different directions along the outer circumference of the sides of the pitch bender 122 so as to emit light of different colors at different positions on the outer circumference.

The CPU 40 is a processor that performs arithmetic processes and integrated control of all the actions of the electronic keyboard musical instrument 1. The CPU 40 may be a single processor or multiple processors performing processes in parallel or independently of each other depending on the processes. The CPU 40 is not limited to a general-purpose processor, but may also be a dedicated processor.

The storage 50 includes volatile memory (RAM) and nonvolatile memory. The RAM provides the CPU 40 with memory space for work and stores temporary data. The nonvolatile memory stores action information, a program(s) 51 for control, and the like. The action information may include the contents of the actions for the settings set in advance (preset), for example, processes related to timbre (overtone distribution), rise and fall of sound and reverberation (echo) of sound, and the like. The action information also includes the emission color information 52 on a color change pattern of the light emitted by the pitch bender light emitter 31, which will be described later. The programs 51 include a light emission control program for the pitch bender light emitter 31 using the above emission color information 52 and the like. At least the CPU 40 and the storage 50 constitute a computer of the present embodiment.

The display 60 performs a display action based on the control by the CPU 40. As described above, each display 60 has a display screen and a portion(s) indicating functional settings and the like by the on/off status of LED lamps.

The sound output circuit 71 converts digital data of the output sound depending on operations of the keyboard 11 and the pitch bender 12 to a drive signal for the speaker 72 and outputs the drive signal. The speaker 72 generates and outputs sound in response to the above drive signal. The sound output circuit 71 and the speaker 72 may be able to produce stereo sound.

The communication unit 80 controls communication with external devices. The communication unit 80 receives sound data from external sound sources and sends the data to the sound output circuit 71 such that the speaker 72 outputs sound in real time. The communication unit 80 may have a connection terminal to which a signal line is connected, or may have a network card for network connection. In addition to or instead of these, the communication unit 80 may have an antenna and communication module for short-range wireless communication, such as Bluetooth (registered trademark), to send and receive data via short-range wireless communication to and from external devices.

As described above, the electronic keyboard musical instrument 1 can exhibit a musical performance function of outputting sound depending on the input operation to the musical performance receiver 10 and a sound output function of outputting sound from the speaker 72 based on sound data from outside via the communication unit 80. These functions can also be used together. When the power button 21 is turned on, the electronic keyboard musical instrument 1 remains in a state in which sound output functions can be performed in response to an external signal input. The musical performance function (power supply for musical performance) is interrupted when there has been no musical performance operation for a certain reference time (for example, six minutes) or longer, and the electronic keyboard musical instrument 1 enters a standby state and some functional operations are stopped. When the musical performance operation is detected, the interrupted functional operation is immediately restarted and the device enters the normal acting state in which musical performance is available.

The power button light emitter 32 and the display 60 are turned off in the standby state and indicate that at least the musical performance function is not being performed. On the other hand, only the pitch bender light emitter 31 remains turned on and indicate that the power button 21 is not turned off or the power supply is not cut off.

Next, the light emitting action of the pitch bender light emitter 31 in the electronic keyboard musical instrument 1 will be described.

As described above, the pitch bender light emitter 31 can emit colored light in the desired color. In response to operation of the pitch bender 12, emission color by the pitch bender light emitter 31 changes corresponding to the amount of the operation (rotation amount, rotation angle). For example, when the pitch is raised, the pitch bender light emitter 31 is changed to a reddish color, and when the pitch is lowered, the pitch bender light emitter 31 is changed to a greenish color.

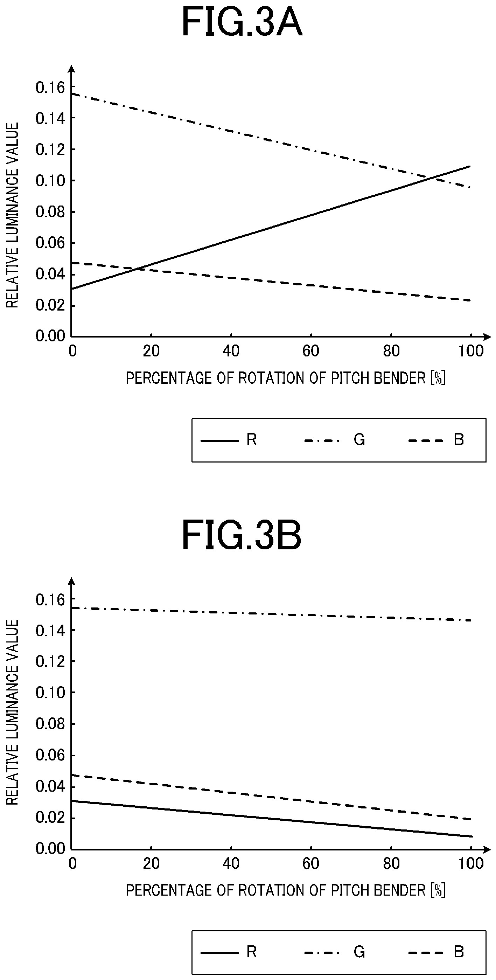

FIG. 3A and FIG. 3B illustrate examples of changes in luminances of the LEDs of respective RGB colors in response to the operation of the pitch bender 12. As illustrated in FIG. 3A, in response to the operation of moving the pitch bender 12 to the high tone side, the emission amount of the red LED increases, and the emission amount of the green and blue LEDs decreases depending on the rotation amount of the pitch bender 12. On the other hand, as illustrated in FIG. 3B, in response to the operation of moving the pitch bender 12 to the low tone side, the emission amounts of the blue and red LEDs decrease depending on the rotation amount of the pitch bender 12.

When the pitch bender 12 is operated, the emission color can change continuously and gradually based on a certain change speed or time constant (speed parameter). In other words, the amount of pitch change and the emission color of the pitch bender 12 do not have to correspond perfectly in real time. The emission color may change smoothly in response to the operation of the pitch bender 12. The speed parameter may change depending on the amount of change in luminance. For example, the speed parameter may be defined such that the time required to change from the emission color before the operation to the emission color after the operation is generally constant, and does not depend significantly on the amount of change in luminance. Of course, the amount of pitch change and the emission color of the pitch bender 12 may correspond perfectly to each other in real time.

When the pitch bender 122 does not receive an input operation, the pitch bender light emitter 31 is controlled such that its emission color changes periodically over time. The cycle of change is not particularly limited, but may be slow, i.e., three to eight seconds (such as six seconds) depending on the breathing cycle of a person, for example.

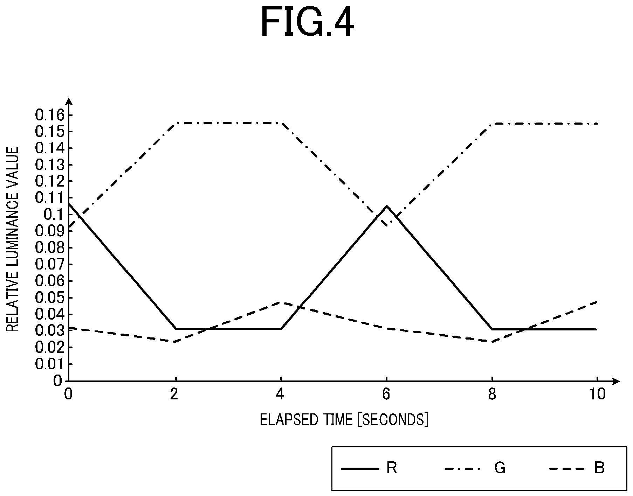

FIG. 4 is a diagram illustrating an example of change in luminance over time of each of the LEDs in the pitch bender light emitter 31. The luminance for 10 seconds in this example changes in a six-second cycle.

The pitch bender light emitter 31 emits light that periodically changes color between greenish color and orangish color. In this example, the luminance of light from the blue LED is kept low during the change. However, the bluish light may also change when it is not used for other applications, such as notification actions, that are not described here. The pitch bender light emitter 31 emits light that varies within an intermediate color range, rather than light of one of the three primary RGB colors. As a result, the emitted light is assured to have soft, not harsh, colors. The degree of this change may be set and adjusted in steps by input operations to the operation receiver 20. The smaller the degree of change, the less noticeable the change, but the more noticeable the color change in response to the rotating operation of the pitch bender 12.

The data for such change patterns may be read sequentially from a table as emission color information 52 that defines the luminance at each timing in advance and is stored in the storage 50, for example. Alternatively, the electronic keyboard musical instrument 1 may change the luminance based on a stored table that defines the ratio of luminance changes instead of the luminance value itself by sequentially reading the ratio of the next luminance to the current luminance.

When the pitch bender 12 is operated in the middle of the change pattern, the emission color from the pitch bender light emitter 31 changes continuously from the color at the start of the operation to a color corresponding to the rotation amount of the pitch bender 12. In other words, depending on the emission color at the start of the operation, the amount of change in luminance of each LED can be larger or smaller than that from the emission color when the pitch bender 12 is at the reference position. The time required for the emission color to change to the color corresponding to the rotation amount of the pitch bender 12 may be kept approximately fixed, with the speed parameter changing depending on the amount of change in luminance as described above. However, when the rotation angle of the pitch bender 12 corresponding to the emission color at the start of the operation of the pitch bender 12 has the same positive or negative sign (the same rotating direction) as and a larger absolute value than the rotation angle after the operation, the luminance of the LED may not change so that the emission color at the start of the operation does not change to the emission color corresponding to the rotation angle of the same sign and smaller absolute value (the light emission color may be fixed to that at the time of the start of the operation). For example, assume a state where the emission color at the start of the operation corresponds to the rotation angle of +20 degrees of the pitch bender 12. From this state, when the pitch bender 12 is rotated to an angle larger than +20 degrees or to a negative angle, the luminance of the LEDs changes. On the other hand, when the rotation angle of the operated pitch bender 12 is larger than 0 degrees and less than +20 degrees, the luminance of the LED may not change. When the rotation angle of the pitch bender 12 changes to be within the range where the LED luminance does not change by the operation as described above and then returned to the zero-degree side, the electronic keyboard musical instrument 1 may determine whether or not to change the luminance of the LEDs by comparing the emission color after the return with the emission color at the start of the operation in the same manner as above. Alternatively, the electronic keyboard musical instrument 1 may always change the luminance of the LEDs.

When the pitch bender 12 is further operated and the rotation amount is newly set before completion of the change of the emission color to a color corresponding to the rotation amount of the pitch bender 12, the luminance change pattern is set again based on the emission color (luminance of each LED) at the start of the further operation and the emission color (luminance) set corresponding to the new rotation amount. When the rotation amount of the pitch bender 12 returns to zero, the pitch bender light emitter 31 may change the luminance such that the emission color returns to the one corresponding to the reference position. After that, the emission color that is constant (for example, the color at the 4-second time point in FIG. 4) may start changing based on the changing pattern. Alternatively, the emission color of the pitch bender light emitter 31 may start to change based on the change pattern when it matches a color of any time in FIG. 4.

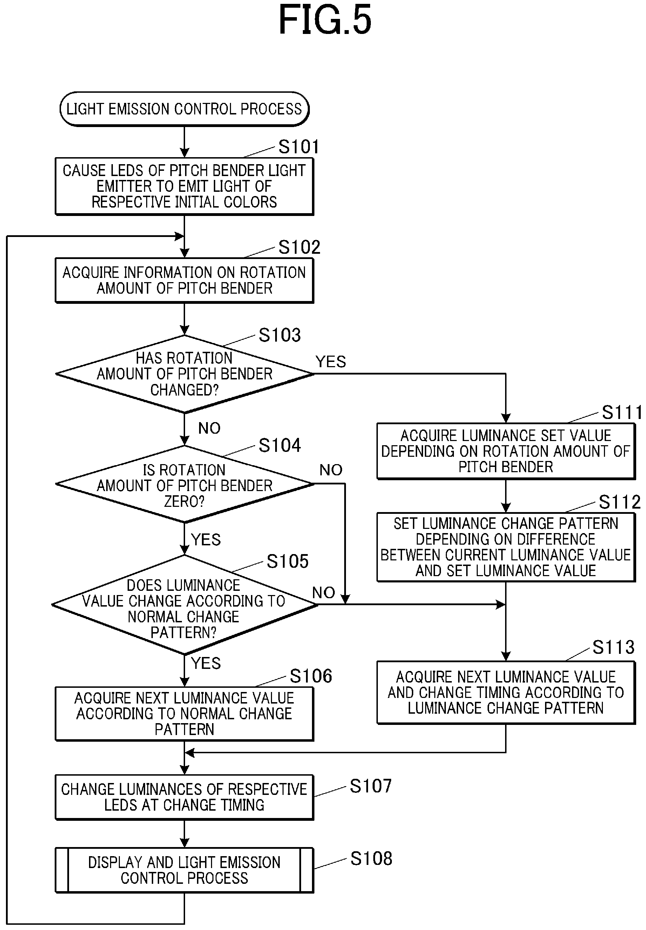

FIG. 5 is a flowchart illustrating the control procedure by the CPU 40 of a light emission control process of the pitch bender light emitter 31 performed by the electronic keyboard musical instrument 1. This light emission control process starts automatically when the power supply to the electronic keyboard musical instrument 1 is started. The process is repeated throughout the duration that power is supplied to the electronic keyboard musical instrument 1.

The CPU 40 causes the LEDs of the pitch bender light emitter 31 to emit light of respective initial colors (step S101). The CPU 40 acquires information on the rotation amount of the pitch bender 12 (Step S102).

The CPU 40 determines whether or not the rotation amount of the pitch bender 12 has changed from that of the previous information acquisition (Step S103). If it is determined that the rotation amount of the pitch bender 12 has changed ("YES" in Step S103), the CPU 40 refers to the emission color information 52 and acquires luminance set values for the respective LEDs depending on the rotation amount of the pitch bender 12 (Step S111).

The CPU 40 sets a luminance change pattern to continuously change the luminances from the current luminance values to the luminance set values depending on the differences between the current luminance values and the acquired luminance set values (Step S112). The CPU 40 acquires the next luminance value and the timing for changing to the next luminance value according to the luminance change pattern that has been set (Step S113).

The CPU 40 causes the pitch bender light emitter 31 to change the luminances of the respective LEDs at the change timing (step S107). The CPU 40 invokes and performs the display and light emission control process (Step S108). The CPU 40 then returns the process to step S102.

If it is determined in the determination process in Step S103 that the rotation amount of the pitch bender 12 has not changed ("NO" in Step S103), the CPU 40 determines whether or not the rotation amount of the pitch bender 12 is zero (Step S104). If it is determined that the rotation amount of the pitch bender 12 is not zero ("NO" in Step S104), the CPU 40 moves the process to Step S113. In the process of Step S113 in this case, the light may have already been the luminance depending on the rotation amount of the pitch bender 12. In this case, the CPU 40 does not have to set the luminance value again, but simply needs to return the process to Step S102 when the change timing is reached.

If it is determined in the determination process in Step S104 that the rotation amount of the pitch bender 12 is zero ("YES" in Step S104), the CPU 40 determines whether or not the luminance value changes according to the normal change pattern (Step S105). If it is determined that the luminance value does not change according to the normal change pattern ("NO" in Step S105), the CPU 40 moves the process to Step S113.

If it is determined that the luminance value changes according to the normal change pattern ("YES" in Step S105), the CPU 40 acquires the next luminance value according to the normal change pattern based on the emission color information 52 (Step S106). Then, the CPU 40 moves the process to Step S107.

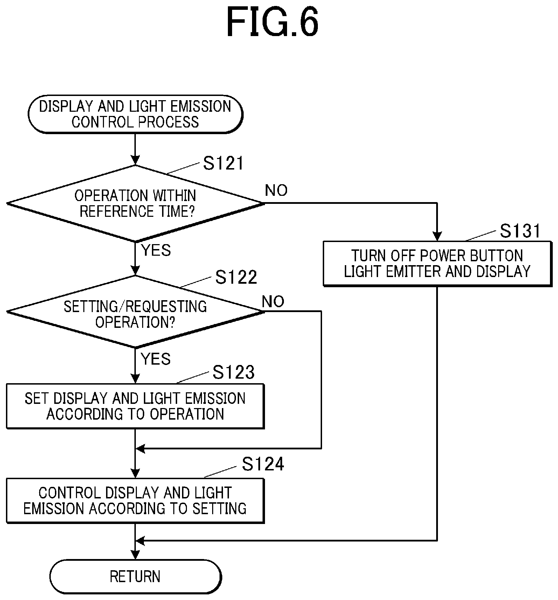

FIG. 6 is a flowchart illustrating a control procedure in the display and light emission control process called in Step S108 in FIG. 5. In this display and light emission control process, display and light emission control of the power button light emitter 32 and the display 60 is performed.

When the display and light emission control process is started, the CPU 40 determines whether or not there has been any input operation to the operation receiver 20 within the latest reference time up to the current time (step S121). This input operation does not have to be an operation of meaningful setting or musical performance, but only needs to be an input operation where some corresponding signal can be detected. If it is determined that there has been no input operation ("NO" in Step S121), the CPU 40 turns off the display of the power button light emitter 32 and the display 60 (Step S131). Then, the CPU 40 finishes the display and light emission control process and returns the process to the light emission control process.

If it is determined that there has been an input operation ("YES" in Step S121), the CPU 40 determines whether or not there has been some setting operation or requesting operation to change the display or light emission content in the latest reference time (Step S122). If it is determined that there has been some setting operation or requesting operation to change the display or light emission content in the latest reference time ("YES" in Step S122), the CPU 40 performs the display and light emission setting depending on the content of the operation (Step S123).

The CPU 40 performs the display control to cause the power button light emitter 32 and the display 60 to display and emit light depending on the display and light emission settings (Step S124). Then, the CPU 40 finishes the display and light emission control process and returns the process to the light emission control process.

If it is determined that there has been no setting operation or requesting operation to change the display or light emission content in the latest reference time ("NO" in Step S122), the CPU 40 performs the display and light emission setting depending on the preset setting content. Then, the CPU 40 finishes the display and light emission control process and returns the process to the light emission control process.

The display and light emission control process may be performed independently of the light emission control process. In this case, the light emission control process may be finished after the process in step S131 upon "NO" in Step S121 and entry to the standby state, and may be restarted upon entry to the normal acting state from the standby state.

As described above, the electronic keyboard musical instrument 1 of the present embodiment includes the operation receiver 20 and the CPU 40. The operation receiver 20 includes the pitch bender 12 (and/or the modulation wheel. The same applies hereinafter). The pitch bender 12 includes the pitch bender light emitter 31 that can emit colored light. When there is an input operation to the pitch bender 12, the CPU 40 causes the pitch bender light emitter 31 to gradually change the emission color from the color at the start of the input operation to a color corresponding to the rotation angle of the pitch bender 12.

In this way, the electronic keyboard musical instrument 1 can change the emission color depending on the rotation amount of the pitch bender 12, thereby reflecting the state of use of the pitch bender 12 in the state of the light emission. Furthermore, a user can enjoy using the electronic keyboard musical instrument 1 because it has not only the inorganic notification function but also the display to the music that is related to an emotional expression.

The CPU 40 changes the emission color of the pitch bender light emitter 31 over time when there is no input operation to the pitch bender 12. Because of such changes in color of the pitch bender 12 even without the operation of the pitch bender 12, the user can enjoy using the electronic keyboard musical instrument 1 because it has not only the inorganic notification function but also the display function to the music that is related to an emotional expression. Since the change from the emission color changing as usual to the emission color depending on the rotation amount of the above pitch bender 12 is a continuous and gradual change, the pitch bender light emitter 31 can avoid an unnatural and discontinuous color representation on the display.

Because the pitch bender 12 or the modulation wheel using the rotating wheel performs the above light emitting action, the electronic keyboard musical instrument 1 can appropriately represent the change of emission color depending on the rotating operation.

Light is emitted from the arc-shaped portion of the protruding disk segment portion. Because of the curved light emitting area, the user does not feel a sharp or rigid impression of the electronic keyboard musical instrument 1, while emotionally affected by the electronic keyboard musical instrument 1.

Since the side surfaces of a portion protruding from the upper surface of the electronic keyboard musical instrument 1 (near the periphery of the both disk-shaped surfaces) emit light, the user can visually recognize the state of light emission even from a distance from the electronic keyboard musical instrument 1.

The electronic keyboard musical instrument 1 includes the power button 21 that receives the operation to switch whether or not power is supplied. The power button 21 has the power button light emitter 32 that is turned on when in the musical performance function state in which power is supplied for the musical performance. When the operation receiver 20 (or the musical performance receiver 10) does not receive an operation for a certain reference time or longer, the CPU 40 causes the power button light emitter 32 to be turned off, the pitch bender light emitter 31 to emit light whose color changes over time, and the electronic keyboard musical instrument 1 to be in the standby state.

Thus, in the standby state, the electronic keyboard musical instrument 1 turns on the pitch bender light emitter 31 instead of the power button light emitter 32. This allows the user at a distance to easily identify the partial action state. The electronic keyboard musical instrument 1 can continue to change the light emission state according to the above change pattern. Therefore, no inorganic display is made while power is supplied to the electronic keyboard musical instrument 1, not only during musical performance. As a result, the user can enjoy using the electronic keyboard musical instrument 1.

The CPU 40 may not cause the pitch bender light emitter 31 to change the emission color in response to an input operation (rotating operation) of the pitch bender 12 when the emission color of the pitch bender light emitter 31 at the start of the input operation corresponds to a rotation angle of the pitch bender 12 larger than the rotation angle after rotation.

In this case, the electronic keyboard musical instrument 1 prevents the color change corresponding to the opposite direction of the rotation of the pitch bender 12. Therefore, the change that enhances the mood is not canceled out.

In the light emission control method of the pitch bender light emitter 31 of the electronic keyboard musical instrument 1 of the present disclosure that includes the pitch bender 12 having the pitch bender light emitter 31 that can emit colored light, in response to the input operation of the pitch bender 12, the color of light emitted by the pitch bender light emitter 31 gradually changes from the color at the start of input operation to a color corresponding to the rotation angle of the rotating wheel.

According to such light emission control, the emission color is changed depending on the rotation amount of the pitch bender 12, so the light emitted by the pitch bender light emitter 31 reflects the state of use of the pitch bender 12. Furthermore, according to this light emission control method, the user can enjoy using the electronic keyboard musical instrument 1 because the pitch bender light emitter 31 has not only the inorganic notification function but also the display function to the music that is related to an emotional expression. Since the change from the emission color changing as usual to the emission color depending on the rotation amount of the above pitch bender 12 is a continuous and gradual change, it is possible to avoid an unnatural and discontinuous color representation on the display.

When the program 51 related to the above light emission control method is run, the light emission state of the rotating wheel (pitch bender 12) is easily changed. The easier control using the program 51 makes it possible for the user to enjoy using the electronic musical instrument more.

The present disclosure is not limited to the above embodiment, but can be modified in various ways.

For example, the cycle of change in the emission color of the pitch bender light emitter 31 according to the change pattern does not have to be close to the human breathing cycle but may be any other cycle. The cycle of change may not be constant, but the cycle itself may change. The change pattern need not be the one described in the embodiment. The change pattern may be any other change pattern, and the luminance change may not be a linear change, but a sinusoidal change, for example.

Also, as long as the colored light emission changes gradually and naturally, the number of luminance steps that can be set for each LED may be defined in an appropriately limited manner. Multiple LEDs may be set and controlled so as not to emit light at combinations of luminance values other than those that are assumed to be possible in advance. The LEDs need not emit light of three RGB colors, but may emit light in an intermediate color. The pitch bender light emitter 31 may also have a light source other than LEDs.

In the standby state explained in the above embodiment, the power button light emitter 32 is turned off, and the pitch bender light emitter 31 continues to light and change color. However, this is not a limitation, as long as the user is able to grasp the standby state based on some display and the like.

The electronic keyboard musical instrument 1 may not enter the standby state. Alternatively, the electronic keyboard musical instrument 1 may also stop actions in response to input of sound data from the outside in the standby state. That is, in the standby state, it is only necessary to detect input operations, to detect input of data to the communication unit 80, and to acquire them. The data processing circuit may be restarted when input of sound data is detected.

In the above embodiment, the examples of the rotating wheel are described to be a pitch bender or a modulation wheel, but is not limited thereto. The electronic keyboard musical instrument 1 may have a musical performance receiver 10 or other operation receiver 20 that receives the rotating operation related to other requirements. The rotating wheel may be able to make more than one turn (360 degrees) at the maximum.

In the above embodiment, an example of the electronic musical instrument is the electronic keyboard musical instrument 1, but is not limited to this. The electronic musical instrument may be any other musical instrument, for example, a guitar or a wind instrument, as long as the pitch can be changed using a pitch bender. In such cases, the electronic musical instrument may have a musical performance receiver 10 corresponding to strings, operating keys or pistons instead of the keyboard 11.

The emission color changes over time in the above embodiment when there is no input operation to the pitch bender 12, but may not change. In this case, the emission color may be a predetermined fixed color or may be a different fixed color for each startup. Alternatively, the emission color may change not simply over time, but at each break in the musical performance, for example.

In the above description, the computer-readable medium storing the program 51 for controlling light emission control according to the present disclosure is the storage 50 including a HDD and nonvolatile memory, such as a flash memory, but not limited to this and may be another nonvolatile memory, such as an MRAM, or a portable recording medium, such as a CD-ROM or a DVD. As a medium to provide data of the program(s) of the present disclosure via a communication line, a carrier wave can be used.

## Claims

1. An electronic musical instrument (1) comprising:
an operation receiver (20) that receives an input operation; and
a processor (40),
wherein the operation receiver (20) includes a rotating wheel (12),
wherein the rotating wheel (12) includes a first light emitter (31) that emits colored light,
wherein, upon the rotating wheel (12) receiving no input operation, the processor (40) causes the first light emitter (31) to change an emission color as a function of elapsed time according to a preset pattern,
wherein the processor (40) causes, upon the rotating wheel (12) receiving an input operation during the change of the emission color according to the preset pattern, the first light emitter (31) to continuously change the emission color according to a luminance change pattern to be set depending on the difference between the current luminance values at a start of the input operation and the luminance set values corresponding to a rotation angle of the rotating wheel (12) having received the input operation.

2. The electronic musical instrument (1) according to claim 1,
wherein the rotating wheel (12) is a pitch bender or a modulation wheel.

3. The electronic musical instrument (1) according to claim 1,
wherein the operation receiver (20) includes a power button (21) that receives an operation of switching whether or not power is supplied,
wherein the power button (21) includes a second light emitter (32),
wherein, upon the operation receiver (20) receiving no operation for a reference time or longer, the processor (40) causes the second light emitter (32) to turn off, the first light emitter (31) to change emission color as a function of the elapsed time according to a preset pattern, and the electronic musical instrument (1) to be in a standby state.

4. The electronic musical instrument (1) according to claim 1,
wherein, upon the rotating wheel (12) receiving an input operation, the processor (40) causes the first light emitter (31) not to change an emission color that is at the start of the input operation and that corresponds to a larger rotation angle of the pitch bender than a rotation angle of the pitch bender having received the input operation.

5. A light emission control method of a first light emitter (31) of an electronic musical instrument (1), the electronic musical instrument (1) including a rotating wheel (12), the rotating wheel (12) including the first light emitter (31) that emits colored light, the light emission control method comprising:
upon the rotating wheel (12) receiving no input operation, the processor (40) causes the first light emitter (31) to change an emission color as a function of elapsed time according to a preset pattern,
upon the rotating wheel (12) receiving an input operation during the change of the emission color according to the preset pattern, causing the first light emitter (31) to continuously change the emission color according to a luminance change pattern to be set depending on the difference between the current luminance set values at a start of the input operation and the luminance set values corresponding to a rotation angle of the rotating wheel (12) having received the input operation.

6. The light emission control method according to claim 5,
wherein the rotating wheel (12) is a pitch bender or a modulation wheel.

7. A program that causes a computer of an electronic musical instrument (1) including a rotating wheel (12) including a first light emitter (31) that emits colored light to:
cause, upon the rotating wheel (12) receiving no input operation, the processor (40) causes the first light emitter (31) to change an emission color as a function of elapsed time according to a preset pattern,
cause, upon the rotating wheel (12) receiving an input operation during the change of the emission color according to the preset pattern, the first light emitter (31) to continuously change the emission color according to a luminance change pattern to be set depending on the difference between the current luminance values at a start of the input operation and the luminance set values corresponding to a rotation angle of the rotating wheel (12) having received the input operation.

8. The program according to claim 7,
wherein the rotating wheel (12) is a pitch bender or a modulation wheel.

## Patentansprüche

1. Elektronisches Musikinstrument (1), umfassend:
einen Bedienungsempfänger (20), der eine Eingabebedienung empfängt; und
einen Prozessor (40),
wobei der Bedienungsempfänger (20) ein Drehrad (12) umfasst,
wobei das Drehrad (12) einen ersten Lichtemitter (31) enthält, der farbiges Licht emittiert,
wobei, wenn das Drehrad (12) keine Eingabebedienung empfängt, der Prozessor (40) bewirkt, dass der erste Lichtemitter (31) eine Emissionsfarbe in Abhängigkeit von der verstrichenen Zeit entsprechend einem voreingestellten Muster ändert,
wobei der Prozessor (40) bewirkt, dass, wenn das Drehrad (12) während der Änderung der Emissionsfarbe entsprechend dem voreingestellten Muster eine Eingabebedienung empfängt, der erste Lichtemitter (31) die Emissionsfarbe kontinuierlich entsprechend einem Luminanzänderungsmuster ändert, das in Abhängigkeit von der Differenz zwischen den aktuellen Luminanzwerten zu einem Beginn der Eingabebedienung und den Luminanzsollwerten entsprechend einem Drehwinkel des Drehrads (12), das die Eingabebedienung empfangen hat, einzustellen ist.

2. Elektronisches Musikinstrument (1) nach Anspruch 1,
wobei das Drehrad (12) ein Pitch-Bender oder ein Modulationsrad ist.

3. Elektronisches Musikinstrument (1) nach Anspruch 1,
wobei der Bedienungsempfänger (20) einen Ein-/Ausknopf (21) enthält, der eine Bedienung des Schaltens, ob Strom zugeführt wird oder nicht, empfängt,
wobei der Ein-/Ausknopf (21) einen zweiten Lichtemitter (32) enthält,
wobei, wenn der Bedienungsempfänger (20) über eine Referenzzeit oder länger keine Bedienung empfängt, der Prozessor (40) bewirkt, dass sich der zweite Lichtemitter (32) ausschaltet, der erste Lichtemitter (31) seine Emissionsfarbe in Abhängigkeit von der verstrichenen Zeit entsprechend einem voreingestellten Muster ändert und das elektronische Musikinstrument (1) in einen Standby-Zustand versetzt wird.

4. Elektronisches Musikinstrument (1) nach Anspruch 1,
wobei der Prozessor (40), wenn das Drehrad (12) eine Eingabebedienung empfängt, bewirkt, dass der erste Lichtemitter (31) eine Emissionsfarbe nicht ändert, die zu einem Beginn der Eingabebedienung vorliegt und die einem größeren Drehwinkel des Pitch-Benders entspricht als ein Drehwinkel des Pitch-Benders, bei dem die Eingabebedienung empfangen wurde.

5. Lichtemissionssteuerverfahren eines ersten Lichtemitters (31) eines elektronischen Musikinstruments (1), wobei das elektronische Musikinstrument (1) ein Drehrad (12) enthält, wobei das Drehrad (12) den ersten Lichtemitter (31) enthält, der farbiges Licht emittiert, und das Lichtemissionssteuerverfahren umfasst:
wenn das Drehrad (12) keine Eingabebedienung empfängt, bewirkt der Prozessor (40), dass der erste Lichtemitter (31) eine Emissionsfarbe in Abhängigkeit von der verstrichenen Zeit entsprechend einem voreingestellten Muster ändert,
wenn das Drehrad (12) während der Änderung der Emissionsfarbe entsprechend dem voreingestellten Muster eine Eingabebedienung empfängt, bewirken, dass der erste Lichtemitter (31) die Emissionsfarbe kontinuierlich entsprechend einem Luminanzänderungsmuster ändert, das in Abhängigkeit von der Differenz zwischen den aktuellen Luminanzsollwerten zu einem Beginn der Eingabebedienung und den Luminanzsollwerten entsprechend einem Drehwinkel des Drehrads (12), das die Eingabebedienung empfangen hat, einzustellen ist.

6. Lichtemissionssteuerverfahren nach Anspruch 5,
wobei das Drehrad (12) ein Pitch-Bender oder ein Modulationsrad ist.

7. Programm zum Bewirken, dass ein Computer eines elektronischen Musikinstruments (1), das ein Drehrad (12) enthält, das einen ersten Lichtemitter (31) enthält, der farbiges Licht emittiert:
bewirkt, dass, wenn das Drehrad (12) keine Eingabebedienung empfängt, der Prozessor (40) bewirkt, dass der erste Lichtemitter (31) eine Emissionsfarbe in Abhängigkeit von verstrichener Zeit entsprechend einem voreingestellten Muster ändert,
bewirkt, dass, wenn das Drehrad (12) während der Änderung der Emissionsfarbe entsprechend dem voreingestellten Muster eine Eingabebedienung empfängt, der erste Lichtemitter (31) die Emissionsfarbe kontinuierlich entsprechend einem Luminanzänderungsmuster ändert, das in Abhängigkeit von der Differenz zwischen den aktuellen Luminanzwerten zu einem Beginn der Eingabebedienung und den Luminanzsollwerten entsprechend einem Drehwinkel des Drehrades (12), das die Eingabebedienung empfangen hat, einzustellen ist.

8. Programm nach Anspruch 7,
wobei das Drehrad (12) ein Pitch-Bender oder ein Modulationsrad ist.

## Revendications

1. Instrument de musique électronique (1) comprenant :
un récepteur d'actionnement (20) qui reçoit un actionnement en entrée ; et
un processeur (40),
dans lequel le récepteur d'actionnement (20) inclut une molette rotative (12),
dans lequel la molette rotative (12) inclut un premier émetteur de lumière (31) qui émet de la lumière colorée,
dans lequel, lorsque la molette rotative (12) ne reçoit aucun actionnement en entrée, le processeur (40) amène le premier émetteur de lumière (31) à modifier une couleur d'émission en tant que fonction de temps écoulé, conformément à un schéma préétabli,
dans lequel le processeur (40) amène, lorsque la molette rotative (12) reçoit un actionnement en entrée pendant la modification de la couleur d'émission conformément au schéma préétabli, le premier émetteur de lumière (31) à modifier en continu la couleur d'émission conformément à un schéma de modification de luminance à établir en fonction de la différence entre les valeurs de luminance actuelles à un début de l'actionnement en entrée et les valeurs établies de luminance correspondant à un angle de rotation de la molette rotative (12) ayant reçu l'actionnement en entrée.

2. Instrument de musique électronique (1) selon la revendication 1,
dans lequel la molette rotative (12) est un modulateur de hauteur de son ou une molette de modulation.

3. Instrument de musique électronique (1) selon la revendication 1,
dans lequel le récepteur d'actionnement (20) inclut un bouton d'alimentation (21) qui reçoit un actionnement de commutation consistant à fournir ou non l'alimentation électrique,
dans lequel le bouton d'alimentation (21) inclut un second émetteur de lumière (32),
dans lequel, lorsque le récepteur d'actionnement (20) ne reçoit aucun actionnement pendant une durée égale ou supérieure à une durée de référence, le processeur (40) amène le second émetteur de lumière (32) à s'éteindre, le premier émetteur de lumière (31) à modifier la couleur d'émission en tant que fonction du temps écoulé conformément à un schéma préétabli, et l'instrument de musique électronique (1) à être en un état de veille.

4. Instrument de musique électronique (1) selon la revendication 1,
dans lequel, lorsque la molette rotative (12) reçoit un actionnement en entrée, le processeur (40) amène le premier émetteur de lumière (31) à ne pas modifier une couleur d'émission existant au début de l'actionnement en entrée et correspondant à un angle de rotation du modulateur de hauteur de son qui est supérieur à un angle de rotation du modulateur de hauteur de son ayant reçu l'actionnement en entrée.

5. Procédé de commande d'émission de lumière d'un premier émetteur de lumière (31) d'un instrument de musique électronique (1), l'instrument de musique électronique (1) incluant une molette rotative (12), la molette rotative (12) incluant le premier émetteur de lumière (31) qui émet de la lumière colorée, le procédé de commande d'émission de lumière comprenant :
lorsque la molette rotative (12) ne reçoit aucun actionnement en entrée, le processeur (40) amène le premier émetteur de lumière (31) à modifier une couleur d'émission en tant que fonction du temps écoulé, conformément à un schéma préétabli,
lorsque la molette rotative (12) reçoit un actionnement en entrée pendant la modification de la couleur d'émission conformément au schéma préétabli, le fait d'amener le premier émetteur de lumière (31) à modifier en continu la couleur d'émission conformément à un schéma de modification de luminance à établir en fonction de la différence entre les valeurs établies de luminance actuelles à un début de l'actionnement en entrée et les valeurs établies de luminance correspondant à un angle de rotation de la molette rotative (12) ayant reçu l'actionnement en entrée.

6. Procédé de commande d'émission de lumière selon la revendication 5,
dans lequel la molette rotative (12) est un modulateur de hauteur de son ou une molette de modulation.

7. Programme qui amène un ordinateur d'un instrument de musique électronique (1) incluant une molette rotative (12) incluant un premier émetteur de lumière (31) qui émet de la lumière colorée, à :
amener, lorsque la molette rotative (12) ne reçoit aucun actionnement en entrée, le processeur (40) à amener le premier émetteur de lumière (31) à modifier une couleur d'émission en tant que fonction du temps écoulé, conformément à un schéma préétabli,
amener, lorsque la molette rotative (12) reçoit un actionnement en entrée pendant la modification de la couleur d'émission conformément au schéma préétabli, le premier émetteur de lumière (31) à modifier en continu la couleur d'émission conformément à un schéma de modification de luminance à établir en fonction de la différence entre les valeurs de luminance actuelles à un début de l'actionnement en entrée et les valeurs établies de luminance correspondant à un angle de rotation de la molette rotative (12) ayant reçu l'actionnement en entrée.

8. Procédé selon la revendication 7,
dans lequel la molette rotative (12) est un modulateur de hauteur de son ou une molette de modulation.
